Europäisches Patentamt

**European Patent Office**

**Office européen des brevets**

(19)

(11) Numéro de publication : **0 077 728**
**B1**

(12) **FASCICULE DE BREVET EUROPÉEN**

(45) Date de publication du fascicule du brevet :
**12.02.86**

(51) Int. Cl.⁴ : **F 16 K 27/04**, F 16 K 27/06

(21) Numéro de dépôt : **82401891.5**

(22) Date de dépôt : **15.10.82**

(54) **Organe de distribution de fluide.**

(30) Priorité : **19.10.81 FR 8119573**

(43) Date de publication de la demande :
**27.04.83 Bulletin 83/17**

(45) Mention de la délivrance du brevet :
**12.02.86 Bulletin 86/07**

(84) Etats contractants désignés :
**DE FR GB**

(56) Documents cités :
**DE-A- 2 046 980**
**FR-A- 2 238 102**
**GB-A- 545 534**
**US-A- 827 170**
**US-A- 2 807 280**
**US-A- 3 598 152**
**US-A- 3 976 103**
**US-A- 4 066 099**

(73) Titulaire : **SOCIETE NATIONALE D'ETUDE ET DE CONSTRUCTION DE MOTEURS D'AVIATION, "S.N.E.C.M.A."**
**2 Boulevard Victor**
**F-75015 Paris (FR)**

(72) Inventeur : **D'Agostino, Guy**
**1, rue Molière**
**F-94400 Vitry (FR)**
Inventeur : **Dhainaut, André**
**117F, avenue Colonel Fabien**
**F-77190 Dammarie les Lys (FR)**
Inventeur : **Petiteau, Jacques, A. A.**
**4, Chemin des Guyottes**
**F-77820 Le Chatelet en Brie (FR)**

(74) Mandataire : **Moinat, François**
**S.N.E.C.M.A. Service des Brevets Boîte Postale 81**
**F-91003 Evry Cedex (FR)**

Jouve, 18, rue St-Denis, 75001 Paris, France

## Description

L'invention est relative aux organes de distribution de fluide du genre connu par ex. du US-A-827 170 et comprenant :

un corps métallique, traversé par un alésage calibré, dans la paroi duquel est ménagée une pluralité de canaux de circulation de fluide dont chacun met en communication l'extérieur de ce corps et son alésage, ledit corps étant constitué par l'assemblage étanche et indémontable d'au moins deux éléments mutuellement liés par des surfaces de contact de formes exactement complémentaires, certains des canaux du corps étant constitués au moins en partie par des sillons usinés dans l'une de ces surfaces de contact,

un noyau mobile dans ledit alésage, constitué d'un tiroir mobile en translation, et présentant des gorges circulaires pour établir des communications différentes entre au moins certains des canaux du corps lorsque ledit noyau occupe au moins deux positions déterminées.

Les documents US-A-827 170 et US-A-3 598 152 décrivent des organes de distribution de fluide obtenus par un assemblage axial de plaquettes dont les surfaces de contact sont complémentaires et comportent des sillons qui constituent des canaux radiaux. De tels dispositifs conviennent assez mal aux organes de distribution comportant un tiroir mobile en translation susceptible d'occuper plusieurs positions. En effet, dans un tel cas, on peut être conduit à réaliser un assemblage d'un grand nombre de plaquettes. La présente invention permet de remédier aux inconvénients propres aux organes de distribution réalisés par des assemblages de pièces planes.

La présente invention concerne :

les organes de distribution de toutes natures (robinets, vannes ou distributeurs) à noyau mobile en translation (tiroir),

tant les organes de distribution de liquide que les organes de distribution de gaz,

tant les organes qui assurent des variations progressives de débit de fluide que ceux qui assurent rapidement des variations du genre tout ou rien (commutation).

Elle s'applique quel que soit le nombre des circuits de distribution de fluide (arrivée et sortie de fluide) et le nombre des canaux du corps, mais son application est d'autant plus avantageuse que ces nombres de circuits et de canaux sont élevés.

En effet, les organes connus de distribution de fluide du genre précité présentent des inconvénients d'autant plus sensibles que le nombre de circuits à desservir est plus élevé. Par exemple, pour permettre l'usinage des orifices des circuits débouchant dans l'alésage du corps, il est souvent nécessaire de constituer celui-ci en deux parties, à savoir d'une part un carter alésé dans lequel sont ménagés des canaux transversaux débouchant latéralement à l'extérieur de ce carter et d'autre part une fourrure alésée insérée dans l'alésage du carter et dans le pourtour de laquelle sont ménagées des gorges annulaires en communication avec ces canaux et débouchant dans l'alésage de cette fourrure par lesdits orifices. Pour éviter les fuites entre les gorges appartenant à des circuits différents, il faut éloigner ces gorges les unes des autres et les séparer par des joints toriques. L'organe de distribution considéré est alors encombrant en longueur (à cause de l'éloignement des gorges et de la présence des joints toriques) et latéralement (à cause des tubulures connectées aux canaux transversaux). Ainsi, plus le nombre de circuits est élevé, plus la réalisation est complexe et coûteuse, plus l'encombrement est grand et plus les risques de fuite apparaissent, et plus la pose et la dépose de la fourrure dans le carter sont difficiles et délicates et les occasions de blesser les joints toriques nombreuses.

L'objet de l'invention est donc un organe de distribution de fluide du genre précité exempt des inconvénients que l'on vient d'évoquer.

L'organe de distribution de fluide de l'invention est caractérisé en ce que deux éléments du corps sont respectivement constitués par deux manchons concentriques, dont un manchon extérieur à alésage cylindrique et un manchon intérieur cylindrique alésé emmanché dans ce manchon extérieur et dans l'alésage duquel est logé le noyau, au moins un sillon étant usiné dans la surface cylindrique extérieure du manchon intérieur pour constituer la partie longitudinale d'au moins un canal courant entre les deux manchons.

Avant assemblage, lesdits éléments sont évidemment munis s'il y a lieu des moyens de centrage et de détrompage éventuellement nécessaires pour obtenir un positionnement relatif convenable.

D'autres dispositions nouvelles et avantageuses apparaissent dans les descriptions qui suivent d'exemples de réalisation d'organes distributeurs de fluide conformes à l'invention. Ces descriptions se réfèrent aux dessins annexés dans lesquels :

la figure 1 est une coupe axiale d'un distributeur hydraulique à tiroir conforme à l'invention, selon une forme de réalisation,

la figure 2 est une section de ce distributeur à tiroir dans le plan de coupe 8-8 de la figure 1.

D'une façon générale, dans lesdites figures :

les jeux entre les corps et les noyaux (tiroirs) sont fortement exagérés,

les sections des surfaces d'assemblage permanent (par exemple par soudage par diffusion) sont représentées par des traits épais,

seules sont décrites et représentées les dispositions dont la description est nécessaire à la compréhension de l'invention.

Notamment, les fonctions des différents circuits obtenus par déplacement des noyaux dans les corps ne sont pas décrites puisque l'invention concerne la construction des distributeurs et non pas lesdites fonctions.

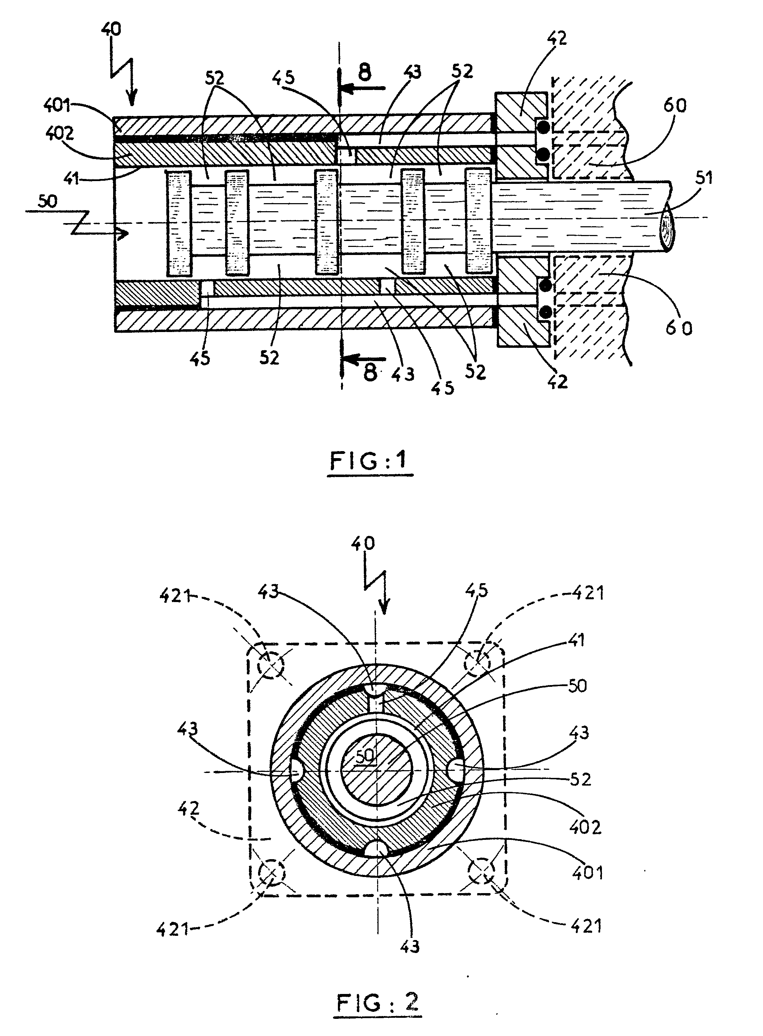

Les figures 1 et 2 sont relatives à un distributeur à tiroir (c'est-à-dire à noyau coulissant) conforme à l'invention. Il s'agit d'un inverseur à quatre voies. Le tiroir cylindrique 50, à deux positions de fonctionnement, coulisse dans l'alésage 41 du corps 40. Il est actionné par une tige 51. Le corps 40 est fixé par une embase 42 sur une paroi de carter 60 au moyen de boulons de fixation traversant des trous 421 forés dans ladite embase. Celle-ci est représentée en traits interrompus dans la figure 8 car elle est en avant du plan de coupe. Des canaux longitudinaux 43 d'amenée ou de départ de fluide sont ménagés dans l'épaisseur du corps 40. Ils débouchent d'une part dans la face de montage de l'embase 42 pour être raccordés à des canalisations et d'autre part dans la paroi de l'alésage 41 par des orifices radiaux 45. Les communications entre certains de ces orifices en fonction des deux positions de fonctionnement du tiroir 50 sont assurées au moyen de gorges circulaires 52 ménagées dans celui-ci.

Conformément à l'invention, le corps 40 est constitué par trois éléments assemblés de façon étanche et indémontable, à savoir :

l'embase 42 elle-même,

un manchon cylindrique extérieur 401 fixé sur l'embase 42,

un manchon cylindrique intérieur 402 emmanché dans le manchon 401 et également fixé sur l'embase 42.

Les canaux longitudinaux 43 sont des rainures de longueurs différentes usinées dans la paroi externe du manchon intérieur 402. Celui-ci est traversé par les orifices 45.

Le procédé de réalisation du corps 40 comprend les phases principales suivantes :

usinage aux cotes générales du manchon 401, du manchon 402 et de l'embase 42,

fraisage des rainures 43 angulairement réparties dans le pourtour du manchon 402 et perçage des orifices 45 dans l'épaisseur de celui-ci,

insertion du manchon 402 dans le manchon 401,

assemblage des deux manchons, par exemple par soudage par diffusion,

affleurage des faces d'extrémité des deux manchons,

assemblage des deux manchons avec l'embase 42, par exemple par soudage par diffusion,

rectification de l'alésage 41,

rectification de la face d'appui de l'embase 42.

En principe, si les deux manchons sont rectifiés avec une précision suffisante, un simple frettage peut suffir pour obtenir leur assemblage étanche. Ce frettage est réalisé d'une façon classique en refroidissant le manchon 402 et en l'introduisant dans le manchon 401 préalablement chauffé. Il est cependant préférable, après l'introduction du manchon 402, de procéder à un véritable soudage par diffusion en appliquant à l'extérieur du manchon 401 et à l'intérieur du manchon 402 une pression isostatique sous une température telle qu'il y ait interdiffusion. On évite ainsi tout risque de fuite entre les deux manchons même si des variations brutales de température de fonctionnement se produisent.

On récapitule maintenant, pour terminer la présente description, les avantages de l'invention. Celle-ci permet :

de réaliser aisément des distributeurs de fluide assurant des fonctions très complexes,

de réduire le nombre de pièces démontables (corps en une seule pièce, réduction du nombre des joints toriques qui ne demeurent nécessaires que pour la jonction des canalisations ou tubulures et des canaux),

de multiplier sans difficulté les orifices des canaux dans l'alésage du corps, car ils peuvent être réalisés avec de petits diamètres et avec une bonne précision,

d'accroître la densité des circuits (nombre de circuits et donc de fonctions par unité de longueur du corps)

et, d'une façon générale, de réduire l'encombrement longitudinal et latéral du corps.

En ce qui concerne ce dernier point, on remarquera que, dans la réalisation décrite, les orifices de raccordement des canaux aux tubulures débouchent tous dans la face d'appui utilisée pour la fixation du distributeur. Mais il est possible de faire passer aussi par cette face d'appui les circuits électriques éventuellement nécessaires à la commande ou au contrôle du fonctionnement. L'invention ne préjuge pas en effet du mode de commande du noyau qui peut être actionné par des moyens manuels, électriques, hydrauliques ou pneumatiques.

L'invention permet ainsi une très grande liberté dans la conception des organes de distribution de fluide, d'autant plus qu'elle permet d'associer ces organes à des circuits de fluide de conception classique (tubulures) ou à des circuits constitués par exemple par des plaques planes assemblées de façon étanche et indémontable et dans lesquelles sont usinés des sillons remplaçant les tubulures.

**Revendication**

Organe de distribution de fluide du genre comprenant :

un corps métallique (40), traversé par un alésage calibré (41), dans la paroi duquel est ménagée une pluralité de canaux de circulation de fluide (43, 45) dont chacun met en communication l'extérieur de ce corps (40) et son alésage, ledit corps (40) étant constitué par l'assemblage étanche et indémontable d'au moins deux éléments mutuellement liés par des surfaces de contact de formes exactement complémentaires, certains des canaux (43) du corps étant constitués au moins en partie par des sillons usinés dans l'une de ces surfaces de contact,

un noyau mobile (50) dans ledit alésage, constitué d'un tiroir mobile en translation et présentant des gorges circulaires (52) pour établir des communications différentes entre au moins certains des canaux (43, 45) du corps (40) lorsque ledit noyau (50) occupe au moins deux positions déterminées,

caractérisé en ce que deux éléments du corps (40) sont respectivement constitués par deux manchons concentriques, dont un manchon extérieur (401) à alésage cylindrique et un manchon intérieur cylindrique alésé (402) emmanché dans ce manchon extérieur et dans l'alésage (41) duquel est logé le noyau (50), au moins un sillon (43) étant usiné dans la surface cylindrique extérieure du manchon intérieur (402) pour constituer la partie longitudinale d'au moins un canal (43) courant entre les deux manchons (401, 402).

**Claim**

Fluid distributing device compounded with :

a metallic body (40) with a calibrated bore (41) passing through it, in the wall of which a plurality of fluid flow channels (43, 45) is provided, each of said channels establishing communication between the exterior of the body (40) and its bore, said body (40) being constituted by the sealed and permanent assembly of at least two members joined together by contact surfaces of exactly complementary shapes, some of the channels (43) of the body being constituted at least in part by notches machined in one of said contact surfaces,

a movable core (50) in said bore, constituted by a spool movable in translation and having circular grooves (52) to establish various communications between at least some of the channels (43, 45) of the body (40) when said core (50) is placed at two specific positions,

characterised in that two members of the body (40) are respectively compounded with two concentric sleeves, of which an outer one (401) has a cylindrical bore, and an inner cylindrical, bored one (402) is received by said outer sleeve, the core (50) being received by the bore (41) of the inner sleeve, at least one channel (43) being machined in the cylindrical outer surface of the inner sleeve (402) to constitute the longitudinal portion of at least one channel (43) extending between the two sleeves (401, 402).

**Patentanspruch**

Flüssigkeits-Verteilungsorgan

mit einem von einer kalibrierten Bohrung (41) durchdrungenen metallischen Körper (40), in dessen Wandung eine Mehrzahl von Kanälen (43, 45) für die Zirkulation der Flüssigkeit vorgesehen sind, von denen jeder den Außenraum des Körpers (40) mit seiner Bohrung verbindet, wobei der Körper (40) durch den dichten und nichtlösbaren Zusammenbau wenigstens zweier Elemente gebildet ist, deren gegenseitige Verbindung durch Kontaktflächen mit exakt komplementären Formen hergestellt ist, und wobei einige der Kanäle (43) des Körpers zumindest teilweise von in einer der genannten Kontaktflächen ausgearbeiteten Rillen gebildet sind,

sowie mit einem in der genannten Bohrung (41) angeordneten beweglichen Kern (50), der von einer translatorisch bewegbaren Stange gebildet ist, die kreisförmige Kehlen (52) aufweist, mittels derer verschiedene Verbindungen zwischen wenigstens einigen der Kanäle (43, 45) des Körpers (40) herstellbar sind, wenn der genannte Kern (50) wenigstens zwei vorbestimmte Positionen besetzt,

dadurch gekennzeichnet, daß zwei Elemente des Körpers (40) von zwei konzentrischen Muffen gebildet sind, nämlich einer äußeren Muffe (401) mit zylindrischer Bohrung und einer mit einer Bohrung (41) versehenen inneren zylindrischen Muffe (402), die in die äußere Muffe eingeschrumpft ist und in deren Bohrung (41) der Kern (50) aufgenommen ist, und daß auf der zylindrischen Außenfläche der inneren Muffe (402) wenigstens eine Rille (43) angebracht ist, die den longitudinalen Teil wenigstens eines zwischen den beiden Muffen verlaufenden Kanals darstellt.

FIG:1

FIG:2